# EUROPÄISCHE PATENTSCHRIFT

(11) **EP 1 556 242 B1**
(45) Veröffentlichungstag und Bekanntmachung des Hinweises auf die Patenterteilung: **12.07.2006**
(21) Anmeldenummer: 03809720.0
(22) Anmeldetag: 01.10.2003
(51) Int. Cl.: B60K 23/08

(54) **ANTRIEBSANORDNUNG FÜR EIN GELÄNDEGÄNGIGES NUTZFAHRZEUG**
DRIVING SYSTEM FOR OFF-ROAD UTILITY VEHICLE
SYSTEME D'ENTRAINEMENT POUR UN VEHICULE UTILITAIRE TOUT-TERRAIN

(30) Priorität: 31.10.2002 DE 10250734
(43) Veröffentlichungstag der Anmeldung: 27.07.2005
(73) Patentinhaber: DaimlerChrysler AG, 70567 Stuttgart (DE)
(72) Erfinder: HEIER, Wolfgang, F-67770 Sessenheim (FR); ZEPF, Baptist, 76571 Gaggennau (DE)
(86) Internationale Anmeldenummer: PCT/EP2003/010895
(87) Internationale Veröffentlichungsnummer: WO 2004/039620

(56) Entgegenhaltungen:
- EP-A- 0 432 549
- DE-A- 4 230 326
- US-A- 4 552 036
- US-B1- 6 347 271

## Beschreibung

Die Erfindung betrifft eine Antriebsanordnung für ein geländegängiges Nutzfahrzeug nach dem Oberbegriff von Patentanspruch 1.

Antriebsanordnungen der eingangs genannten Art sind bekannt, insbesondere durch die serienmäßigen UNIMOG-Nutzfahrzeuge der Anmelderin, bei denen ein Antriebsmotor über eine Fahrkupplung ein Hauptschaltgetriebe mit mehreren, insbesondere mit vier Gängen antreibt, dem eine zweistufige Rangegruppe in Form eines Planetensatzes im Kraftfluss in Reihe zugeordnet ist. Von dem Hauptschaltgetriebe führt ein Antriebspfad zu einem Verteilergetriebe, welches einen Vorderachsabtrieb und einen Hinterachsabtrieb aufweist. Über den Hinterachsabtrieb ist eine permanente Antriebsverbindung zwischen dem Hauptschaltgetriebe und dem Achsantrieb der Hinterachse geschaffen. Bei einer ersten, hochgeländegängigen UNIMOG-Ausführung ist im Verteilergetriebe eine von Hand steuerbare Achszuschaltkupplung in Form einer Klauenkupplung wirkungsmäßig zwischen Hinterachsabtrieb und Vorderachsabtrieb vorgesehen, über welche der Achsantrieb der Vorderachse dem Achsantrieb der Hinterachse zuschaltbar ist. Bei einer zweiten, als Geräteträger konzipierten UNIMOG-Ausführung mit permanentem Allradantrieb, die meistens auf befestigten Straßen eingesetzt wird, ist im Verteilergetriebe zum Ausgleich der Drehzahlunterschiede zwischen Vorder- und Hinterachse(n) beim Durchfahren von engen Kurven ein Längsdifferential wirkungsmäßig zwischen Hinterächsabtrieb und Vorderachsabtrieb vorgesehen, das eine im Idealfall gleichmäßige Aufteilung des Antriebsmomentes auf Vorder- und Hinterachse bewirkt. Durch den permanenten Eingriff aller Räder ist bei diesem Allradantrieb auch im schweren Traktonseinsatz auf griffiger Fahrbahn eine Überlastung der Hinterachse(n) grundsätzlich vermieden, ohne dass dies vom Fahrer abhängig ist. Durch eine formschlüssige, von Hand steuerbare Differentialsperre ist die Möglichkeit gegeben, eine bessere Traktion bei diesem Allradantrieb zu erzielen. Bei beiden UNIMOG-Ausführungen sind die Querdifferentiale der Achsantriebe von Vorder- und Hinterachse gleichfalls durch von Hand steuerbare formschlüssige Differentialsperren sperrbar.
Die Vorteile der UNIMOG-Ausführung mit zuschaltbarer Vorderachse liegen im Wesentlichen in der gezielten Zuschaltmöglichkeit bei entsprechenden Einsatzprofilen (z.B. Zugmaschinen- oder Geländeeinsatz) und in einem "klaren Triebstrangzustand" durch bewusstes Zuschalten der Vorderachse und der Differentialsperren der Querdifferentiale. Die über mehrere Jahrzehnte gesammelte Erfahrung mit dieser UNIMOG-Ausführung hat gezeigt, dass die Vorteile dieser einfachen und überschaubaren Art, die Vorderachse zuzuschalten, in den meisten Einsätzen überwiegen. Diese langjährigen Erfahrungen zeigen auch, dass eine vorausschauende Fahrweise und Einschätzung der Bodenverhältnisse sowohl im leichten als auch gerade im schweren Gelände sich als wesentlich effektiver und sicherer herausgestellt haben als alle bisher bekannten Steuer- und Regelsysteme. Diese Systeme erkennen schwierige Fahrbahnuntergründe erst, wenn das Fahrzeug bereits einen Verlust an Geschwindigkeit oder des Vortriebs erfahren hat, wohingegen der Fahrer bereits im Voraus die Situation einschätzen und ggfls. den Vorderradantrieb zuschalten kann. Allerdings besteht im schweren Traktionseinsatz die Gefahr, dass bei hohen Reibwerten die Hinterachs-Antriebskomponenten übermäßig beansprucht werden, wenn aus Unachtsamkeit des Fahrers die Vorderachse nicht zugeschaltet ist.

Unabhängig hiervon ist aus der DE 30 34 229 A1 eine gattungsfremde Antriebsanordnung für ein über ein automatisches Getriebe vorderradangetriebenes Kraftfahrzeug (Pkw) mit einem mit der Kurbelwelle des Motors des Kraftfahrzeuges verbundenen Drehmomentwandler bekannt, bei der das automatische Getriebe mit der Turbinenwelle des Drehmomentwandlers verbunden ist und ein Planetengetriebe und mehrere strömungsmittelbetätigte Einrichtungen zum Erzeugen verschiedener Betriebszustände sowie ein Enduntersetzungsgetriebe zum Übertragen der Ausgangsleistung des automatischen Getriebes auf die Vorderräder aufweist. Bei dieser Antriebsanordnung ist eine Kupplungseinrichtung zum Übertragen der Ausgangsleistung des automatischen Getriebes auf die Hinterräder vorgesehen, welche eine strömungsmittelbetätigte Mehrscheibenkupplung enthält. Da es zum Umschalten auf Vierradantrieb als zu kompliziert angesehen wird, zunächst den Wählhebel des automatischen Getriebes in die Neutralstellung zu bringen, um einen zweiten Hebel für das Einrücken der Kupplungseinrichtung für das Zuschalten der Hinterachse betätigen zu können, ist es erwünscht, dass der Vorderradantrieb automatisch auf den Vierradantrieb in Abhängigkeit von dem Antriebszustand geschaltet wird. Im Großen und Ganzen wird bei dieser Antriebsanordnung angestrebt, ein automatisches Getriebe mit einer druckölbetriebenen Mehrscheibenkupplung zu schaffen, wobei das Schalten zwischen dem Vorderradantrieb und dem Vierradantrieb entsprechend den verschiedenen Antriebsbedingungen des Kraftfahrzeuges ausgeführt und des Weiteren die Mehrscheibenkupplung durch im automatischen Getriebe verwendetes Drucköl in Abhängigkeit von den Antriebsbedingungen des Fahrzeuges betätigt werden kann. Demgemäß enthält bei dieser Antriebsanordnung eine Druckölregeleinrichtung zum Betätigen der strömungsmittelbetätigten Einrichtungen des automatischen Getriebes ein Druckregelventil zum Erzeugen eines Leitungsdruckes entsprechend dem Betriebszustand des Motors und ein Umschaltventil zum Verbinden einer Leitung für den Leitungsdruck mit der strömungsmittelbetätigten Mehrscheibenkupplung. Ferner ist bei dieser Anriebsanordnung eine manuelle Betätigungseinrichtung zum Betätigen des Umschaltventiles vorgesehen, um den Leitungsdruck an die strömungsmittelbetätigte Mehrscheibenkupplung anzulegen.

Aus der EP 0 076 148 B1 ist eine weitere gattungsfremde Antriebsanordnung für ein vorderradangetriebenes Kraftfahrzeug (Pkw) mit einem Motor und einer Einrichtung zur Regelung des Antriebsdrehmomentes bekannt, bei welcher eine Transmission zur wirksamen Kraftübertragung vom Motor auf die Vorderräder, eine Reibungskupplung für die Kraftübertragung auf die Hinterräder und eine Kupplungsbetätigungseinrichtung zum Einkuppeln und Trennen der Reibungskupplung vorgesehen sind. Bei dieser bekannten Antriebsanordnung wird davon ausgegangen, dass die Reibungskupplung generell mit Schlupf betrieben werden kann, der in Abhängigkeit vom Lenkwinkel einregelbar ist, um bei Kurvenfahrt die höhere Drehzahl der einen größeren Kurvenradius als die Hinterräder durchlaufenden Vorderräder zu ermöglichen, und darüber hinaus angestrebt, den Schlupf der Reibungskupplung in Abhängigkeit weiterer Parameter des Antriebszustandes, wie den Schlupf der Fahrzeugräder, einstellen zu können. Zu diesem Zweck ist bei dieser bekannten Antriebsanordnung weiterhin vorgesehen, dass die Kupplungsbetätigungseinrichtung eine Auswahleinrichtung aufweist, die wahlweise eine Teileinkupplung, eine Einkupplung stärker als die Teileinkupplung oder ein Trennen der Reibungskupplung ermöglicht, und dass die Regelungseinrichtung eine Schlupferfassungseinrichtung zum Erfassen des Schlupfes der Räder, eine Belastungserfassungseinrichtung zum Erfassen der Motorbelastung und eine Regelvorrichtung aufweist, die in Abhängigkeit von den Signalen der Schlupferfassungseinrichtung und der Belastungserfassungseinrichtung die Auswahleinrichtung so betätigt, dass bei schwerer Belastung und bei Schlupf der Räder die stärkere Einkupplung der Reibungskupplung erfolgt.

Schließlich ist aus der DE 38 38 709 A1 noch eine weitere gattungsfremde Antriebsanordnung für ein Kraftfahrzeug mit selbsttätiger Umschaltung von Zweiradantrieb auf Vierradantrieb in Abhängigkeit vom Schlupf der beiden dauernd angetriebenen Räder bekannt. Bei dieser gattungsfremden Antriebsanordnung sollen die Nachteile von einem herkömmlichen Verfahren zum Erkennen eines den Vierradantrieb fordernden Maßes des Schlupfes der dauernd angetriebenen Räder vermieden werden, welche darin gesehen werden, dass im Betriebszustand des Vierradantriebes in kurz aufeinander folgenden Zeitabständen eine mechanische Trennung der zugeschalteten Räder vom Antrieb nötig sei. Dies soll dadurch ereicht sein, dass mit Hilfe zweier je einem der beiden dauernd angetriebenen Räder zugeordneten Sensoren die Drehzahldifferenz dieser Räder dauernd gebildet und einem Rechner zugeleitet wird, der für den Zwei- und.Vierradantrieb je eine fahrzeugspezifische Kenndrehzahldifferenz eingespeichert hat und die zugeleitete Drehzahldifferenz in Abhängigkeit vom jeweiligen Antriebszustand mit einer dieser Kenndrehzahldifferenzen vergleicht, wobei der Antrieb mittels eines dem Rechner nachgeschalteten Stellgliedes von Zweiradantrieb auf Vierradantrieb oder umgekehrt umschaltbar ist, wenn der Vergleich ein Überschreiten der dem Zweiradantrieb zugeordneten Kenndrehzahldifferenz bzw. Unterschreiten der dem Vierradantrieb zugeordneten Kenndrehzahldifferenz ergibt.

Aus der gattungsgemäßen DE 42 30 326 A1 ist eine Antriebsanordnung für ein Kraftfahrzeug mit selbsttätiger Umschaltung von Zweiradantrieb auf Vierradantrieb bekannt. Diese Funktion ist nur in einer sogenannten automatischen Betriebsweise aktiv. In dieser Betriebsweise wird bei einem zu starken Schlupf der beiden dauernd angetriebenen Räder auf Vierradantrieb umgeschaltet.

Aus der US 4,552,036 A1 ist ein automatisches Getriebe für ein Kraftfahrzeug bekannt, welches selbsttätig von Zweiradantrieb auf Vierradantrieb umschalten kann. Eine Umschaltung auf Vierradantrieb erfolgt nur dann, wenn die dauernd angetriebenen Räder zum Rutschen neigen.

Aus der US 6,347,271 B1 ist eine gattungsfremde Antriebsanordnung für ein Kraftfahrzeug mit selbsttätiger Umschaltung von Zweiradantrieb auf Vierradantrieb bekannt. Die Umschaltung von Zweiradantrieb auf Vierradantrieb erfolgt in Abhängigkeit von einem aufwändig berechneten Quotienten aus Drosselklappenstellung und aktueller Beschleunigung des Kraftfahrzeugs. Der Vierradantrieb wird aktiviert, wenn der genannte Quotient einen in einer Steuerungseinrichtung abgespeicherten Grenzwert überschreitet.

Die der vorliegenden Erfindung zugrunde liegende Aufgabe ist dagegen im Wesentlichen darin zu sehen, dass bei einer gattungsgemäßen Antriebsanordnung für ein geländegängiges Kraftfahrzeug, bei welcher das Zuschalten der Vorderachse generell durch den Fahrer von Hand gesteuert wird, der Gefahr entgegengetreten wird, dass die Hinterachse im schweren Traktionseinsatz bei hohen Reibwerten übermäßig beansprucht und dadurch ihre Lebensdauer reduziert wird, weil durch Unachtsamkeit des Fahrers die Vorderachse nicht zugeschaltet ist.

Die erläuterte Aufgabe ist gemäß der Erfindung mit den Merkmalen von Patentanspruch 1 in vorteilhafter Weise gelöst.

Bei der Antriebsanordnung nach der Erfindung sind die Vorteile der manuellen Einschaltung des Allradantriebes durch Zuschaltung der Vorderachse im Gelände sichergestellt und zu hohe Beanspruchungen der Hinterachse(n) vermieden, die sonst bei rein manueller Zuschaltweise der Vorderachse im schweren Traktionseinsatz auf griffigen Fahrbahnen aus Unachtsamkeit des Fahrers auftreten können. Durch die Vermeidung dieses Nachteiles kann in vielen Einsatzfällen auf einen permanenten Allradantrieb mit Längsdifferential verzichtet werden. Das bedeutet, dass bei den bisherigen Allradversionen mit Längsdifferential das Längsdifferential im Verteilergetriebe entfallen kann.

Bei der Antriebsanordnung nach der Erfindung erfolgt im Normalbetrieb der Vortrieb nur über die Hinterachse(n). Bei erforderlicher höherer Traktion oder bei Fahrbahnoberflächen mit niedrigen Kraftschlussbeiwerten wird die Vorderachse manuell durch den Fahrer oder bei einer Ausführungsform gemäß Patentanspruch 7 mit entsprechender Ausrüstung über schlupfabhängige automatische Regelungs- und/oder Steuersysteme zugeschaltet. Demzufolge wird kein Längsdifferential zwischen Vorder- und Hinterachse(n) benötigt. Die fahrmechanischen Vorteile einer solchen Antriebsanordnung nach der Erfindung mit generell manuell zuschaltbarer Vorderachse bestehen in den klar definierten Schaltzuständen des Antriebsstranges und des daraus resultierenden eindeutigen Traktions- und Fahrverhaltens.

Bei der Antriebsanordnung nach der Erfindung ist die Zuschaltstrategie bezüglich der Vorderachse und der Differentialsperren der Achsdifferentiale je nach Antriebszustand und Kraftschlussbeiwerten in zweierlei Hinsicht so getroffen, dass einerseits bei Traktion auf griffiger Fahrbahn mit hohen Kraftschlussbeiwerten die Vorderachse selbsttätig in Abhängigkeit vom Motormoment zugeschaltet wird und die Zuschaltung erst oberhalb eines Schwellwertes einer Motorlast erfolgt. In vorteilhafter Weise ist der Schwellwert auf einen definierten Bruchteilswert des maximalen Motormomentes bezogen und berücksichtigt die momentane Getriebeübersetzung. Dieser definierte Bruchteilswert kann je nach Fahrzeugtyp bzw. -ausführung gemäß Patentanspruch 2 in einem Wertebereich zwischen 60% und 90% des maximalen Motormomentes liegen und gemäß Patentanspruch 3 vorzugsweise ca. 75% betragen.

Bei einer vorteilhaften Ausführungsform der Antriebsanordnung nach der Erfindung gemäß Patentanspruch 4 muss diese Motorlast zur effektiven Zuschaltung des Vorderradantriebes die durch den Schwellwert definierte Grenze für eine bestimmte Zeit überschritten haben, um sicherzustellen, dass es sich nicht nur um eine kurzzeitige Momentenspitze handelt, sondern um einen quasistatischen Lastfall, z.B. Traktion auf einer Steigung. Andererseits ist bei der Antriebsanordnung nach der Erfindung bei Baustellenbetrieb, im Winterdienst und im Gelände zur Erhöhung der Traktion und Fahrsicherheit bei niedrigen Kraftschlussbeiwerten ein fahrerbestimmtes manuelles Zu- und Abschalten stufenweise derart vorgesehen, dass in einer ersten Stufe die Vorderachse zugeschaltet wird, wenn das Kraftfahrzeug auf einer Baustelle, im Winterdienst oder im Gelände eingesetzt wird. Dieser Antriebszustand wird dem Fahrer durch Aufleuchten eines einzelnen Warndreieckes in einem Informatinsdisplay angezeigt. In einer zweiten Stufe können die Achsdifferentiale der Hinterachsen gesperrt werden, z.B. wenn sich das Kraftfahrzeug im Off-Road-Betrieb befindet und die Kraftschlussbeiwerte niedrig sind. Hierbei ist noch eine akzeptable Lenkfähigkeit gegeben. Dieser Antriebszustand wird dem Fahrer durch das Aufleuchten von zwei Warndreiecken im Informationsdisplay angezeigt. Schließlich können in einer dritten Stufe die Achsdifferentiale der Vorderachse und der Hinterachsen gesperrt werden, so dass eine maximale Traktion gegeben ist. Dieser Antriebszustand wird vom Fahrer gewählt, wenn sich das Fahrzeug im Off-Road-Betrieb, im schweren Gelände bzw. auf einem mit Schlamm bedeckten Untergrund befindet und durch das Aufleuchten von drei Warndreiecken im Informationsdisplay angezeigt.

Bei der Antriebsanordnung nach der Erfindung überprüft eine elektronische Steuereinheit in einem permanenten Regelzustand die lastabhängige Notwendigkeit einer selbsttätigen Zuschaltung der Vorderachse. Diese Funktion kann gemäß Patentanspruch 5 jederzeit vom Fahrer überspielt, das heißt manuell abgeschaltet werden.

Bei der Antriebsanordnung nach der Erfindung gemäß Patentanspruch 6 überprüft eine elektronische Steuereinheit, wenn sich das Kraftfahrzeug durch die zugeschaltete Vorderachse im Allradantrieb befindet, in einem permanenten Regelzustand die weitere Notwendigkeit, ob der Betrieb eines den Fahrzustand beeinflussenden Regel- und/oder Steuersystemes wie ABS, ADM (Automatisches Antriebsstrang-Management), FDR (Fahrdynamik-Regelung) oder MDR (Motordrehzahlregelung) durch den Allradantrieb beeinträchtigt oder gar gehindert ist. Für diesen Fall schaltet die Steuereinheit die Vorderachse zwangsläufig ab.

Bei der Antriebsanordnung nach der Erfindung in der Ausführung nach Patentanspruch 7 können in Anwendung auf bestimmte Fahrzeugtypen, bspw. Feuerwehrfahrzeuge, der lastabhängigen Zuschaltstrategie für die Vorderachse die von den Pkw und Geländefahrzeugen her bekannten schlupfabhängigen (Längs- und Querschlupf) Zuschaltstrategien überlagert sein. Im Zusammenhang mit derartigen Zuschaltstrategien ist aus der DE 43 27 507 C2 ein Verfahren zur selbsttätigen Steuerung der Kupplungen zur Aktivierung wenigstens einer Achsquersperre sowie einer Längssperre oder der Zuschaltung des Vorderradantriebes im Antriebsstrang eines allradangetriebenen Geländefahrzeuges bekannt, bei dem ausgehend von Raddrehzahlsignalen Schlupfsignale gebildet, mit Schwellenwerten verglichen und so Steuersignale für die Kupplungen erzeugt werden. Bei diesem bekannten Verfahren wird so vorgegangen, dass für jede einzelne Kupplung jeweils ein eigener Steuermodul vorgesehen ist, der Steuersignale für die eigene Kupplung erzeugt, dass die Steuermoduln der Kupplung der wenigsten einen Achsquersperre auch Steuersignale für die Kupplung der Längssperre oder für die Zuschaltung der Vorderachse abgeben, bevor sie die eigene Kupplung ansteuern, und dass die Schlupfsignale Schlupfsummensignale sind, die getrennt durch Integration der der wenigstens einen Achssperre, der Längssperre oder der Zuschaltung des Vorderradantriebes zugeordneten Raddrehzahldifferenzen gebildet und mit gestuften Schlupfsummenschwellenwerten verglichen werden, durch die die Reihenfolge und die Reaktionszeit der Sperrung der Sperren oder der Zuschaltung des Vorderradantriebes gesteuert wird.

Die Erfindung ist nachstehend anhand einer in der Zeichnung schematisch dargestellten Ausführungsform näher beschrieben. In der Zeichnung bedeuten:
- Fig. 1: eine Antriebsanordnung nach der Erfindung in der Darstellung nach Art eines Blockschaltbildes, und
- Fig. 2: einen Signalflussplan zur Steuerung der beiden Antriebszustände Hinterachsantrieb und Allradantrieb.

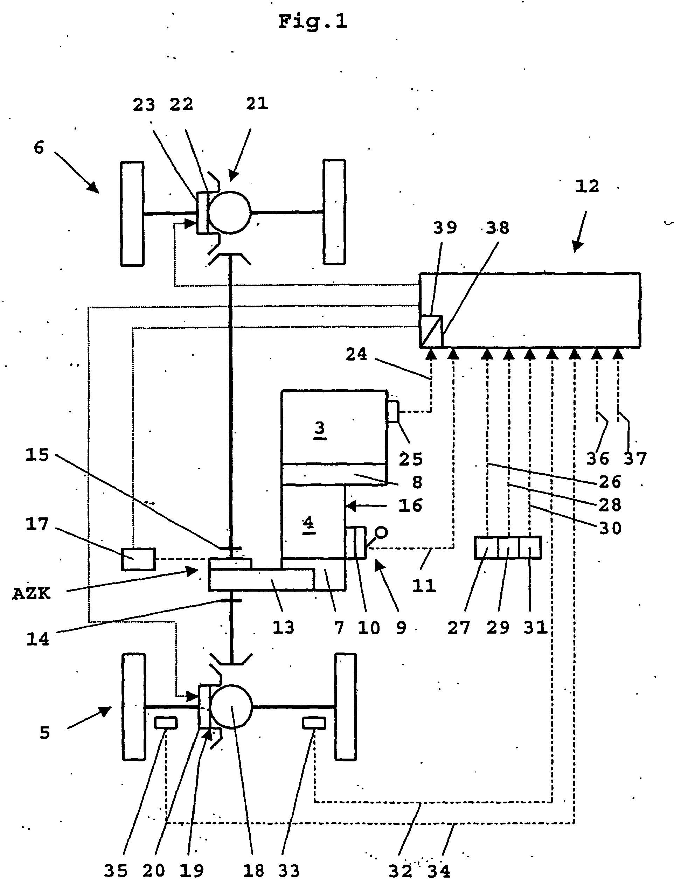

Unter Bezugnahme zunächst auf die Figur 1 wird ein geländegängiges Nutzfahrzeug von einem Antriebsmotor 3 her über ein Zahnräderwechselgetriebe 16 angetrieben, das ein vierstufiges Grundgetriebe 4 aufweist, dem ein zweistufiges Bereichsgetriebe 7 bspw. in Form eies Planetensatzes im Kraftfluss in Reihe zugeordnet ist. Das Grungetriebe 4 steht mit dem Antriebsmotor 3 über eine Fahrkupplung 8 in Antriebsverbindung. Die unter Vermittlung des Bereichsgetriebes 7 sich ergebenden acht Gänge des Zahnräderwechselgetriebes 16 werden durch eine Handschaltvorrichtung 9 ggfls. mit Hilfskraftunterstützung geschaltet, welche einen Stellungssensor 10 aufweist, der ein Signal 11 für eine Ganganzeige und eine diesbezügliche Getriebeübersetzung erzeugt, welches als Eingangssignal einer elektronischen Steuereinheit 12 zugeleitet wird. Die Ausgangswelle des Zahnräderwechselgetriebes 16 steht mit einem Verteilergetriebe 13 in Antriebsverbindung, welches einen einer Hinterachse 5 zugeordneten Getriebeabtrieb 14 und einen einer Vorderachse 6 zugeordneten Getriebeabtrieb 15 aufweist.

Der Getriebeabtrieb 14 steht sowohl mit der Ausgangswelle des Zahnräderwechselgetriebes 16 als auch mit einem Achsdifferential (Querdifferential) 18 der Hinterachse 5 ständig in Antriebsverbindung. Das Achsdifferential 18 ist durch eine formschlüssige, ein- und ausrückbare Differentialsperre 19 sperrbar, welche durch ein über die Steuereinheit 12 ansteuerbares motorisches Sperrstellglied 20 betätigbar ist.

Der Getriebeabtrieb 15 für die Vorderachse 6 ist mit dem Getriebeabtrieb 14 durch eine ein- und ausrückbare Achszuschaltkupplung AZK verbunden, welche durch ein über die Steuereinheit 12 ansteuerbares motorisches Kupplungsstellglied 17 betätigt wird. Der Getriebeabtrieb 15 ist weiterhin mit einem Achsdifferential (Querdifferential) 21 der Vorderachse 6 ständig antriebsmäßig verbunden, welches durch eine formschlüssige, ein- und ausrückbare Differentialsperre 22 sperrbar ist, die durch ein über die Steuereinheit 12 insbesondere schlupfgeregelt oder durch den Fahrer ansteuerbares motorisches Sperrstellglied 23 betätigbar ist.

Die elektronische Steuereinheit 12 wird durch eine Vielzahl von fahrzeug- und fahrzustandsspezifischen Informationen in Form von Eingangsignalen gespeist, u.a. von
- einem vom momentanen Motormoment Mₘ abhängigen Eingangssignal 24 einer Momentenerfassungseinrichtung 25,
- dem dem eingelegten Gang des Zahnräderwechselgetriebes 16 und einer diesbezüglichen Getriebeübersetzung i_{G} entsprechenden Eingangssignal 11,
- einem durch den Fahrer mittels einer Schalttaste 27 auslösbaren Eingangssignal 26 für die Zuschaltung der Vorderachse 6 mittels Aktivierung der Achszuschaltkupplung AZK,
- einem durch den Fahrer mittels einer Schalttaste 29 auslösbaren Eingangssignal 28 für die Sperrung des Achsdifferentiales 18 der Hinterachse 5 mittels Aktivierung der Differentialsperre 19,
- einem durch den Fahrer mittels einer Schalttaste 31 auslösbaren Eingangssignal 30 für die Sperrung des Achsdifferentiales 21 der Vorderachse 6 mittels Aktivierung der Differentialsperre 22,
- einem durch einen Drehzahlsensor 33 erzeugten Eingangsignal 32 für die Drehzahl des einen Hinterrades der Hinterachse 5,
- einem durch einen Drehzahlsensor 35 erzeugten Eingangsignal 34 für die Drehzahl des anderen Hinterrades der Hinterachse 5,
- einem den Betriebszustand des ABS anzeigenden Eingangssignal 36 und
- einem den Betriebszustand eines den Fahrzustand beeinflussenden weiteren Regelungs- und/oder Steuerungssystemes wie ADM (Automatisiertes Antriebsmanagement), FDR (Fahrdynamikregelung) oder MDR (Regelung der Motordrehzahl auf konstanten Drehzahlwert).

Schließlich sind in der Steuereinheit 12 - wie bei 38 angedeutet - ein Schwellwert SW für eine kritische Motorlast M, welche bspw. von einem Motormoment Mₘ gleich ca. 75% des maximalen Motormomentes ausgeht und die momentane Getriebeübersetzung i_{G} berücksichtigt, sowie - wie bei 39 angedeutet - eine dem Schwellwert SW zugeordnete Verzögerungszeit Tᵥ abgelegt. Bei einer Motorlast M < SW ist die ***selbsttätige*** lastabhängige Zuschaltung der Vorderachse 6 gesperrt. Eine selbsttätige lastabhängige Zuschaltung der Vorderachse 6 erfolgt erst dann, wenn eine Motorlast M > Schwellwert SW über die Verzögerungszeit Tᵥ hinaus ansteht und eine Überspielung von Hand oder durch den Fahrzustand beeinflussende Regelungs- und/oder Steuersyteme wie ABS und dgl. nicht wirksam wird.

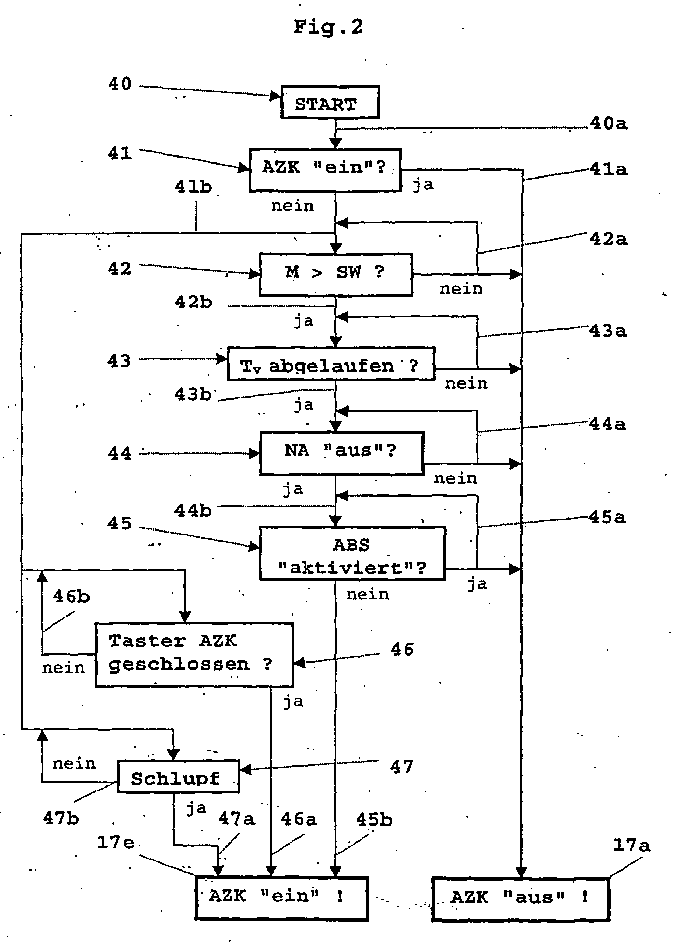

Die Arbeitsweise der Antriebsanordnung von Figur 1 ergibt sich aus dem Signalflussplan der Figur 2 wie folgt:

Durch Aktivierung einer Startstufe 40 stößt diese mittels eines Ausgangssignales 40a eine Prüfstufe 41 an, mittels derer festgestellt wird, ob die Vorderachse 6 zugeschaltet ist. Wenn dies der Fall ist, gibt die Prüfstufe 41 ein Abschaltsignal 41a auf das Stellglied 17 der Achszuschaltkupplung AZK, so dass dieses in seine Abschaltstellung 17a für das Auskuppeln der AZK gebracht wird. Andernfalls schaltet die Prüfstufe 41, wenn die Vorderachse 6 mithin nicht zugeschaltet ist, ein Ausgangssignal 41b auf eine Vergleichsstufe 42 sowie auf zwei Prüfstufen 46 und 47.

Durch das Anstoßen der einen Prüfstufe 46 wird festgestellt, ob die Schalttaste 27 zum manuellen Zuschalten der Vorderachse 6 gedrückt ist. Wenn dies der Fall ist, beaufschlagt die Prüfstufe 46 das Kupplungsstellglied 17 mit einem Zuschaltsignal 46a, durch welches das Kuplungsstellglied 17 unabhängig davon, wie der weitere Ablauf ab der Vergleichsstufe 42 vor sich geht, in seine Stellung 17e für das Zuschalten der Vorderachse 6 gebracht wird. Andernfalls wird die Prüfstufe 46 durch Abgabe eines Ausgangssignales 46b in eine Warteschleife bis zum nächsten Arbeitstakt gesetzt, durch den die Prüfstufe 46 dann erneut angestoßen wird.

Durch das Anstoßen der anderen Prüfstufe 47 wird anhand der Drehzahlsignale 32 und 34 festgestellt, ob sich die Hinterachse 5 im Schlupfzustand befindet. Wenn dies der Fall ist, beaufschlagt die Prüfstufe 47 das Kupplungsstellglied 17 mit einem Zuschaltsignal 47a, durch welches das Kuplungsstellglied 17 unabhängig davon, wie der weitere Ablauf ab der Vergleichsstufe 42 vor sich geht, in seine Stellung 17e für das Zuschalten der Vorderachse 6 gebracht wird. Andernfalls wird die Prüfstufe 47 durch Abgabe eines Ausgangssignales 47b in eine Warteschleife bis zum nächsten Arbeitstakt gesetzt, durch den die Prüfstufe 47 dann erneut angestoßen wird.

Durch das Anstoßen der Vergleichsstufe 42 wird festgestellt, ob die momentane Motorlast M, welche sich aus der Verknüpfung des Motormomentes Mₘ mit der aktuellen Getriebeübersetzung i_{G} zu M = Mₘ x i_{G} ergibt, größer als der Schwellwert SW ist. Wenn dies zutrifft, erzeugt die Vergleicherstufe 42 ein Ausgangssignal 42b zum Anstoßen einer Prüfstufe 43. Andernfalls gibt die Vergleicherstufe 42 ein Abschaltsignal 42a für das Kupplungsstellglied 17 und zum Setzen einer Warteschleife ab, so dass beim nächsten Takt die Vergleicherstufe 42 erneut angestoßen wird.

In der Prüfstufe 43 wird festgestellt, ob die Verzögerungszeit Tᵥ abgelaufen ist. In diesem Fall erzeugt die Prüfstufe 43 ein Ausgangssignal 43b zum Anstoßen einer weiteren Prüfstufe 44. Andernfalls gibt die Prüfstufe 43 ein Abschaltsignal 43a für das Kuplungsstellglied 17 und zum zum Setzen einer Warteschleife ab, so dass die Prüfstufe 43 beim nächsten Arbeitstakt erneut angestoßen wird.

In der Prüfstufe 44 wird festgestellt, ob Nebenantriebe NA oder Zapfwellen oder dgl. in Betrieb sind. Wenn dies nicht zutrifft, erzeugt die Prüfstufe 44 ein Ausgangssignal 44b zum Anstoßen einer letzten Prüfstufe 45. Ist jedoch bspw. eine Zapfwelle in Betrieb, gibt die Prüfstufe 44 ein Abschaltsignal 44a für das Kupplungsstellglied 17 und zum Setzen einer Warteschleife ab, so dass die Prüfstufe 44 beim nächsten Arbeitstakt erneut angestoßen wird.

Mittels der Prüfstufe 45 wird festgestellt, ob das ABS aktiviert ist. Wenn das ABS zur Regelung der Bremskräfte nicht aktiviert ist, erzeugt die Prüfstufe 45 ein Ausgangssignal 45b zur Beaufschlagung des Kupplungsstellgliedes 17, so dass letzteres in seine Stellung 17e für das Einrücken der AZK und somit zum Zuschalten der Vorderachse 6 gebracht wird. Sollte andererseits das ABS in Funktion sein und die Bremskräfte regeln, gibt die Prüfstufe 45 ein Abschaltsignal 45a für das Kupplungsstellglied 17 und zum Setzen einer Warteschleife ab, so dass die Prüfstufe 45 beim nächsten Arbeitstakt erneut angestoßen wird.

Die für das erwähnte Überspielen der Funktionen "Zuschalten" und "Abschalten" in Bezug auf die Vorderachse durch den Fahrer oder durch fahrzeugsspezifische Regelungsund/Steuersystemen benötigten Prioritäts-Schaltstufen sind zum leichteren Verständnis der Antriebsanordnung nicht mehr dargestellt.

## Patentansprüche

1. Antriebsanordnung für ein geländegängiges Nutzfahrzeug mit wenigstens einer von einem Antriebsmotor (3) her über ein mehrgängiges Zahnräderwechselgetriebe (4) permanent antreibbaren Hinterachse (5) und einer Vorderachse(6), welche mit der Hinterachse (5) durch eine Achszuschaltkupplung (AZK) wirkungsmäßig verbunden ist, und bei der die Achszuschaltkupplung (AZK) zum Ein- und Ausrücken generell von Hand gesteuert wird,
**dadurch gekennzeichnet,**
**dass** das Einrücken der Achszuschaltkupplung (AZK) zusätzlich in Abhängigkeit von einer Motorlast (M), welche sich aus einer Verknüpfung eines Motormoments (Mₘ) mit der momentanen Getriebeübersetzung (i_{G}) ergibt, selbsttätig auslösbar ist und das selbsttätige Einrücken der Achszuschaltkupplung (AZK) bei einer Motorlast (M) erfolgt, die größer als ein Schwellwert (SW) ist, welcher auf einen definierten Bruchteilswert des maximalen Motormomentes des Antriebsmotores (3) bezogen ist und die momentane Übersetzung berücksichtigt.

2. Antriebsanordnung nach Patentanspruch 1,
**dadurch gekennzeichnet,**
**dass** der definierte Bruchteilswert in einem Wertebereich zwischen 60% und 90% des maximalen Motormomentes (Mₘ) des Antriebsmotores (3) liegt.

3. Antriebsanordnung nach Patentanspruch 2,
**dadurch gekennzeichnet,**
**dass** der definierte Bruchteilswert etwa 75% des maximalen Motormomentes (Mₘ) des Antriebsmotores (3) beträgt.

4. Antriebsanordnung nach einem der Patentansprüche 1 bis 3,
**dadurch gekennzeichnet,**
**dass** das selbsttätige Einrücken der Achszuschaltkupplung (AZK) während einer vorgegebenen Zeitspanne (TV) ab dem Erreichen des Schwellwertes (SW) gesperrt ist.

5. Antriebsanordnung nach einem der Patentansprüche 1 bis 4,
**dadurch gekennzeichnet,**
**dass** das selbsttätige Einrücken der Achszuschaltkupplung (AZK) von Hand überspielbar ist.

6. Antriebsanordnung nach einem der Patentansprüche 1 bis 5,
**dadurch gekennzeichnet,**
**dass** das selbsttätige Einrücken der Achszuschaltkupplung (AZK) in Abhängigkeit von einem den Fahrzustand beeinflussenden Regel- und/oder Steuersystem (ADM und/oder ABS und/oder FDR und/oder MDR) überspielbar ist.

7. Antriebsanordnung nach einem der Patentansprüche 1 bis 6,
**dadurch gekennzeichnet,**
**dass** das Einrücken der Achszuschaltkupplung (AZK) zusätzlich und selbsttätig durch einen vom Schlupfzustand der Hinterachse (5) des Nutzfahrzeuges abhängigen Parameter auslösbar ist.

## Claims

1. Driving system for an off-road utility vehicle comprising at least one rear axle, (5) which can be permanently driven by a drive engine (3) via a multi-speed gear manual transmission (4), and a front axle (6), which is operatively connected to the rear axle (5) by an axle selection coupling (ASC), and in which the axle selection coupling (ASC) is generally controlled by hand for engaging and disengaging, **characterised in that** the engaging of the axle selection coupling (ASC) can additionally be triggered automatically as a function of an engine load (M) which is produced from a linking of an engine torque (Mₘ) to the instantaneous gear transmission ratio (i_{G}), and the automatic engaging of the axle selection coupling (ASC) takes place at an engine load (M), which is greater than a threshold value (SW), which is related to a defined fractional value of the maximum engine torque of the drive engine (3) and takes into account the instantaneous ratio.

2. Drive system according to claim 1, **characterised in that** the defined fractional value is in a value range between 60% and 90% of the maximum engine torque (Mₘ) of the drive engine (3).

3. Drive system according to claim 2, **characterised in that** the defined fractional value is about 75% of the maximum engine torque (Mₘ) of the drive engine (3).

4. Drive system according to any one of claims 1 to 3, **characterised in that** the automatic engaging of the axle selection coupling (ASC) is blocked for a predetermined time period (TV) from reaching the threshold value (SW).

5. Drive system according to any one of claims 1 to 4, **characterised in that** the automatic engaging of the axle selection coupling (ASC) can be overridden by hand.

6. Drive system according to any one of claims 1 to 5, **characterised in that** the automatic engaging of the axle selection coupling (ASC) can be overridden as a function of an open and/or closed loop control system (ADM and/or ABS and/or VDC and/or ESC), which influences the driving state.

7. Drive system according to any one of claims 1 to 6, **characterised in that** the engaging of the axle selection coupling (ASC) can be triggered, additionally and automatically, by a parameter which is dependent on the slip state of the rear axle (5) of the utility vehicle.

## Revendications

1. Système d'entraînement pour un véhicule utilitaire tout-terrain comportant au moins un essieu arrière (5) pouvant être entraîné en permanence par un moteur d'entraînement (3) par l'intermédiaire d'un engrenage à plusieurs étages(4) et un essieu avant (6), qui est relié en fonctionnement à l'essieu arrière (5) par un couplage de raccordement d'essieu (AZK), et dans lequel le couplage de raccordement d'essieu (AZK) est commandé en général manuellement pour embrayer et débrayer, **caractérisé en ce que** l'embrayage du couplage de raccordement d'essieu (AZK) peut être déclenché automatiquement en plus selon une charge moteur (M), qui résulte d'une combinaison d'un couple moteur (Mₘ) avec le rapport de transmission momentané (i_{G}), et l'embrayage automatique du couplage de raccordement d'essieu (AZK) s'effectue lors d'une charge moteur (M), qui est supérieure à une valeur de seuil (SW), qui se rapporte à une valeur de fraction définie du couple moteur maximal du moteur d'entraînement (3) et tient compte du rapport de transmission momentané.

2. Système d'entraînement selon la revendication 1, **caractérisé en ce que** la valeur de fraction définie se trouve dans une plage de valeurs comprise entre 60 % et 90 % du couple moteur maximal (Mₘ) du moteur d'entraînement (3).

3. Système d'entraînement selon la revendication 2, **caractérisé en ce que** la valeur de fraction définie se monte à environ 75 % du couple moteur maximal (Mₘ) du moteur d'entraînement (3).

4. Système d'entraînement selon l'une des revendications 1 à 3, **caractérisé en ce que** l'embrayage automatique du couplage de raccordement d'essieu (AZK) est coupé pendant une période prédéterminée (TV) à partir du moment où la valeur de seuil (SW) est atteinte.

5. Système d'entraînement selon l'une des revendications 1 à 4, **caractérisé en ce que** l'embrayage automatique du couplage de raccordement d'essieu (AZK) peut être enclenché manuellement.

6. Système d'entraînement selon l'une des revendications 1 à 5, **caractérisé en ce que** l'embrayage automatique du couplage de raccordement d'essieu (AZK) peut être enclencher selon un système de réglage et/ou de commande (ADM et/ou ABS et/ou ESP et/ou MDR) influençant l'état de conduite.

7. Système d'entraînement selon l'une des revendications 1 à 6, **caractérisé en ce que** l'embrayage du couplage de raccordement d'essieu (AZK) peut être déclenché en plus et automatiquement par un paramètre dépendant de l'état de glissement de l'essieu arrière (5) du véhicule utilitaire.
